# EUROPÄISCHE PATENTSCHRIFT

(11) **EP 4 202 758 B1**
(45) Veröffentlichungstag und Bekanntmachung des Hinweises auf die Patenterteilung: **09.10.2024**
(21) Anmeldenummer: 21216207.7
(22) Anmeldetag: 21.12.2021
(51) Int. Cl.: G06K 7/14

(54) **CODELESER UND VERFAHREN ZUM LESEN EINES OPTISCHEN CODES**
CODE READER AND METHOD FOR READING AN OPTICAL CODE
LECTEUR DE CODE ET PROCÉDÉ DE LECTURE D'UN CODE OPTIQUE

(43) Veröffentlichungstag der Anmeldung: 28.06.2023
(73) Patentinhaber: SICK AG, 79183 Waldkirch (DE)
(72) Erfinder: Hampf, Marcel, 77955 Ettenheim (DE); Schüler, Pascal, 79331 Teningen (DE)

(56) Entgegenhaltungen:
- US-A1- 2012 080 515
- US-A1- 2021 073 499

## Beschreibung

Die Erfindung betrifft ein Verfahren zum Lesen eines optischen Codes und einen Codeleser nach dem Oberbegriff von Anspruch 1 beziehungsweise 15.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die Code tragenden Objekte an dem Codeleser vorbei gefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Zum Decodieren eines Barcodes wird ein Grauwertprofil über eine Linie quer zum Barcode aufgenommen. Häufig erfolgt eine Mehrfachauswertung über mehrere Linien. Die Codeelemente, also die hellen und dunklen Balken oder Striche, werden anhand ihrer Breiten klassifiziert und entsprechend ihrer Positionen aneinandergereiht. Die Klassifikation hat hier zum Ziel, das Vielfache der Breite gegenüber einem kleinsten Codeelement oder schmalsten Balken herauszufinden, denn dadurch wird der Codeinhalt festgelegt.

Für diese Auswertung wird das Grauwertprofil binarisiert, d.h. mit einer Grauwertschwelle in ein Schwarz-Weiß-Profil gewandelt. Im Falle einer idealen Binarisierung entsteht für alle dunklen Balken der Wert Null und für alle hellen Balken der Wert Eins, so dass die Klassifikation unmittelbar und eindeutig aus der Länge der Folgen von Nullen und Einsen folgt. Um diesem Idealfall möglichst nahe zu kommen, werden unter anderem dynamische Grauwertschwellen verwendet. Da eine jeweilige Balkengrenze ein Übergang von hell nach dunkel oder umgekehrt ist, wird oft das Grauwertprofil differenziert, um diese Übergänge oder Kanten zu lokalisieren.

In dem Grauwertprofil eines real aufgenommenen Barcodes sind aber die Übergänge zwischen den Balken nicht mehr so eindeutig zu lokalisieren. Zu den möglichen Ursachen für eine Unschärfe zählen Fehlfokussierung, eine zu geringe Auflösung und Bewegungsartefakte (Motion Blur). Die Übergänge oder Kanten sind dann unscharf oder verwaschen, Pixel oder Pixelgruppen registrieren Licht von mehreren benachbarten Codeelementen.

Besonders deutlich zeigen sich die Auswirkungen bei geringen Auflösungen unter einem Pixel pro Codeelement, wenn das Abtasttheorem verletzt ist. Die Anzahl Pixel pro kleinstem Codeelement, schmalstem Balken oder Modul wird als Modulgröße bezeichnet. Wenn beispielsweise bei einer Modulgröße eins ein Balken mittig auf einem Pixel erfasst wird, so wird hierfür nach Binarisierung die Breite eins gemessen. Wird aber derselbe Balken zwischen zwei Pixel erfasst, so verteilt sich das Licht auf zwei Pixel, und es wird die Breite zwei gemessen und somit falsch klassifiziert. In relativ schwächerer, aber weiterhin relevanter Ausprägung zeigt sich dieser Effekt bei höheren Modulgrößen.

Folglich werden Module beziehungsweise Codeelemente oder Balken unter Umständen gar nicht mehr detektiert, oder deren Breite und Position wird zu ungenau. Ab einer gewissen Stärke der negativen Einflüsse verhindert das ein erfolgreiches Codelesen. Die am Beispiel von Barcodes beschriebene Problematik tritt in ähnlicher Weise bei 2D-Codes auf.

Die US 2021/0073499 A1 offenbart ein Verfahren zum Bestimmen der Modulgröße eines optischen Codes, bei dem ein Helligkeitshistogramm erzeugt und die Modulgröße daraus geschätzt wird. Die unabhängigen Ansprüche sind gegen dieses Dokument abgegrenzt.

Aus der US2012/0080515 A1 ist ein datengetriebener Klassifizierer zum Erfassen von Barcodes bekannt. Dabei werden Intensitätsprofile des Barcodes ausgewertet, um darin Kanten und Extrema aufzufinden. Entsprechende Merkmalsvektoren werden in ein neuronales Netz eingespeist, das mit Daten aus simulierten, verrauschten Merkmalsvektoren bei bekanntem Codeinhalt trainiert wurde.

Es ist daher Aufgabe der Erfindung, das Decodieren eines optischen Codes zu verbessern.

Diese Aufgabe wird durch ein Verfahren zum Lesen eines optischen Codes und einen Codeleser nach Anspruch 1 beziehungsweise 15 gelöst. Der optische Code kann ein Barcode, aber auch ein zweidimensionaler Code nach einem der diversen bekannten Standards sein. Es wird ein Helligkeitsprofil oder Grauwertprofil des Codes aufgenommen. Bei einem Barcode ist dies eine eindimensionale Funktion von Helligkeits- oder Grauwerten längs einer Linie quer über den Barcode, beispielsweise Werten von 0 bis 255 bei einer 8-Bit-Codierung der Helligkeitswerte. Bei einem 2D-Code wird ein entsprechendes Helligkeitsprofil über zwei Ortsdimensionen erfasst, die ohne Beschränkung der Allgemeinheit mit X und Y bezeichnet werden können, wobei dann anschaulich die Helligkeit in Z-Richtung abgetragen werden kann.

In dem Helligkeitsprofil werden helle und dunkle Teilbereiche identifiziert. Dies kann beispielsweise anhand einer Binarisierungsschwelle, einer Suche nach Hell-Dunkelübergängen beispielsweise durch Differenzieren des Helligkeitsprofils oder nach Minima und Maxima geschehen. Dann wird der Codeinhalt des optischen Codes gelesen. Herkömmlich würde dazu die Ausdehnung und Position der hellen und dunklen Teilbereiche bestimmt.

Die Erfindung geht von dem Grundgedanken aus, zum Bestimmen des Codeinhalts Summenmaße der hellen und dunklen Teilbereiche zu bestimmen. Das Helligkeitsprofil misst die Ortsverteilung der erfassten Lichtmenge. Erste Summenmaße werden für die Lichtmenge in den jeweiligen hellen Teilbereichen bestimmt. Zweite Summenmaße bestimmen komplementär in den jeweiligen dunkeln Teilbereichen die zu einem weißen, insbesondere maximalen Pegel fehlende Lichtmenge. Es wird also für die zweiten Summenmaße invertiert und damit ausdrücklich nicht über das Helligkeitsprofil selbst summiert, das wäre ein Summieren über Werte, die ideal bei Null liegen, so dass die zweiten Summenmaße sehr ungenau blieben. Vorzugsweise wird jeweils ein erstes Summenmaß pro hellem Teilbereich und ein zweites Summenmaß pro dunklem Teilbereich bestimmt. Der Codeinhalt wird dann unter Einbeziehen der ersten und zweiten Summenmaße bestimmt. Vorzugsweise reicht allein die Information der ersten und zweiten Summenmaße, um den Codeinhalt zu lesen

Die Erfindung hat den Vorteil, dass eine wesentlich robustere Bestimmung von Codeelementen oder Einzelmodulen in Ausdehnung und Position ermöglicht wird, und dies auch dann, wenn der optische Code nur unscharf, gering aufgelöst oder verwaschen aufgenommen werden konnte. Dementsprechend werden mehr optische Codes lesbar, die Leserate als der wesentliche Leistungsparameter beim Codelesen steigt. Der einleitend erläuterte Einfluss von Sampling-Effekten, Unschärfe und Bewegungsartefakten wird reduziert, und es wird sogar die Decodierung von Einzelerfassungen eines Helligkeitsprofils unterhalb der Auflösungsgrenze von einem Pixel pro Modul beziehungsweise einer Modulgröße eins ermöglicht.

Für die ersten Summenmaße wird bevorzugt jeweils das Helligkeitsprofil zwischen zwei seiner Minima aufsummiert, vorzugsweise zwischen zwei benachbarten Minima. Ein jeweiliges erstes Summenmaß sammelt demnach die Lichtmenge eines hellen Teilbereichs quasi von Tal zu Tal über den gesamten Berg hinweg. Das Minimum ist hier zunächst weit zu verstehen als ein Punkt in diesem Tal und nur vorzugsweise das Minimum im strengen mathematischen Sinn. Beispielsweise könnte auch die Mitte zwischen einer fallenden und einer anschließenden steigenden Flanke herangezogen werden. Um von Minimum zu Minimum summieren zu können, geht vorzugsweise eine Suche nach Minima beziehungsweise Tälern in dem Helligkeitsprofil voraus.

Für die zweiten Summenmaße wird bevorzugt jeweils das Helligkeitsprofil zwischen zwei seiner Maxima aufsummiert wird, vorzugsweise zwischen zwei benachbarten Maxima. Die Ausführungen des Vorabsatzes gelten sinngemäß, wobei nun quasi von Berg zu Berg beziehungsweise von Gipfel zu Gipfel des Helligkeitsprofils summiert wird.

Zur Bestimmung der zweiten Summenmaße wird bevorzugt das Helligkeitsprofil invertiert und um ein Offset entsprechend dem weißen Pegel kompensiert. Das ist eigentlich nur eine Veranschaulichung, die Berechnung der fehlenden Lichtmenge kann auf beliebige Weise erfolgen. Durch das Invertieren, beispielsweise durch Multiplikation mit -1, bilden nun die fehlenden Lichtmengen Peaks oder Maxima statt wie zuvor Täler oder Minima, allerdings bei negativen Werten. Um wieder in den positiven Bereich zu kommen, wird das invertierte Helligkeitsprofil um den weißen Pegel nach oben korrigiert. In dem invertierten, verschobenen Helligkeitsprofil können nun die zweiten Summenmaße genauso bestimmt werden wie die ersten Summenmaße in dem ursprünglichen Helligkeitsprofil.

Die ersten Summenmaße und/oder die zweiten Summenmaße werden bevorzugt durch Integration bestimmt. In den hellen Teilbereichen kann wie üblich ein Integral mit der X-Achse als Bezug gebildet werden. In den dunklen Teilbereichen liegt die Bezugsachse nach oben versetzt beim weißen Pegel. Es wurde schon beschrieben, wie dies durch Invertieren und ein Offset entsprechend dem weißen Pegel auf ein übliches Integral zurückgeführt werden kann. Da das Helligkeitsprofil in der Praxis diskret ist, ohne damit analoge Erfassung oder Umrechnung in ein kontinuierliches Helligkeitsprofil auszuschließen, ist die Integration meist ebenfalls diskret, ein Aufsummieren der Abtastwerte in den hellen beziehungsweise dunklen Teilbereichen.

Der Codeinhalt wird bevorzugt aus einer alternierenden Sequenz der ersten Summenmaße und der zweiten Summenmaße bestimmt. In dem Helligkeitsprofil wechseln sich helle Teilbereiche und dunkle Teilbereiche ab. Werden die Summenmaße dementsprechend alternierend in der durch das Helligkeitsprofil vorgegebenen Reihenfolge angeordnet, so lässt sich daraus der Codeinhalt ablesen. Die Zahlenwerte der Summenmaße sollten dabei vorzugsweise noch vorverarbeitet werden, wie sogleich in vorteilhaften Ausführungsformen vorgestellt.

Die ersten Summenmaße und die zweiten Summenmaße werden vorzugsweise klassifiziert, insbesondere anhand einer aus mindestens einem feinsten Summenmaß geschätzten Bezugsgröße. Durch die Klassifikation wird aus den Summenmaßen das jeweilige Vielfache der Ausdehnung zu einer Bezugsgröße eines kleinsten Moduls oder schmalsten Balkens des optischen Codes festgestellt. Das ergibt dann die Sequenz der Codeelemente und letztlich den Codeinhalt. Die Klassen sind daher vorzugsweise durch Vielfache der Bezugsgröße vorgegeben. Das jeweilige feinste oder kleinste Summenmaß, egal ob ein erstes oder zweites Summenmaß, ermöglicht die Schätzung der Bezugsgröße, oder es werden dafür die i kleinsten Summenmaße herangezogen und beispielsweise gemittelt. Grundsätzlich ist jeder bekannte Klassifikator einsetzbar, einschließlich Verfahren der künstlichen Intelligenz oder des maschinellen Lernens beziehungsweise neuronaler Netze.

Vorzugsweise werden die ersten Summenmaße und die zweiten Summenmaße durch eine Bezugsgröße dividiert und dann diskretisiert, wobei insbesondere die Bezugsgröße aus mindestens einem feinsten Summenmaß geschätzt wird. Das ist eine konkrete, sehr einfache Möglichkeit der Klassifikation als Vielfache der Bezugsgröße. Die Summenmaße werden dabei in einer einfachen Weise auf die Bezugsgröße normiert oder diskretisiert.

Der optische Code ist bevorzugt ein 2D-Code, und es werden insbesondere die ersten Summenmaße und die zweiten Summenmaße in einer Umgebung von Minima oder Maxima bis zu einer durch einen Schwellwert bestimmten Helligkeitsgrenze bestimmt. Im zweidimensionalen Fall liegen die Minima und Maxima in einer Art zweidimensionaler Landschaft. Für jeden hellen oder dunklen Teilbereich sollte daher eine sinnvolle Summierungs- oder Integrationsgrenze angegeben werden. Das wird in dieser vorteilhaften Ausführungsform durch die Helligkeitsgrenze angegeben, die der Helligkeitswert im Falle der ersten Summenmaße vom Minimum kommend überschreitet und im Falle der zweiten Summenmaße vom Maximum kommend unterschreitet. Somit werden durch die Helligkeitsgrenze die relevanten Nachbarschaften der jeweiligen Berge oder Täler der hellen und dunklen Teilbereiche abgegrenzt. Es ist denkbar, unterschiedliche Schwellwerte für die hellen beziehungsweise dunklen Teilbereiche zu setzen.

Das Helligkeitsprofil wird bevorzugt in Unterabschnitte aufgeteilt, in denen jeweils erste Summenmaße und zweite Summenmaße bestimmt werden, insbesondere rechteckige Unterabschnitte, Zeilen oder Spalten. Das erfindungsgemäße Verfahren wird somit auf unterschiedliche Teilabschnitte des optischen Codes angewandt, vorzugsweise nicht nur in Bezug auf das Bestimmen von Summenmaßen, sondern auch auf die alternierende Anordnung und Klassifikation wie oben beschrieben. Die unterteilte Anwendung des erfindungsgemäßen Verfahrens ist besonders für 2D-Codes interessant. Beispielhafte Unterteilungen sind kleine Rechtecke, aber auch Spalten, Zeilen oder sonstige lineare Unterteilungen, denn Letzteres kann dann jeweils wie ein 1D-Fall oder Barcode behandelt werden, wobei abschließend die Teilergebnisse zusammengefasst werden.

Das Helligkeitsprofil wird bevorzugt mehrfach in unterschiedliche Unterabschnitte aufgeteilt, um mehrfach erste und zweite Summenmaße zu bestimmen, wobei die Ergebnisse miteinander verrechnet oder verglichen werden, insbesondere durch logische Verknüpfung. Es werden also mehrere unterschiedliche Unterteilungen angewandt und anschließend die Ergebnisse konsolidiert. Dabei kann beispielsweise die oben eingeführte Helligkeitsgrenze variiert werden, oder es werden in einer besonders bevorzugten Ausführungsform zwei Unterteilungen in Spalten und Zeilen vorgenommen. Ein vorteilhafter Schritt bei der Verrechnung der Ergebnisse ist eine logische Verknüpfung, beispielsweise ein UND beziehungsweise ein ODER.

Der erfindungsgemäße Codeleser zum Lesen von optischen Codes weist einen Lichtempfänger zum Erfassen eines Helligkeitsprofils auf. Das kann der Lichtempfänger eines Codescanners, ein Zeilensensor zur Erfassung einer Codezeile oder eines flächigen Codebildes durch Zusammensetzen von Bildzeilen oder ein Matrixsensor sein. Auch mehrere Kameraköpfe sind denkbar, deren Bild zusammengesetzt wird. In einer Steuer- und Auswertungseinheit, die selbst Teil eines Barcodescanners oder eines kamerabasierten Codelesers oder als Steuerungsgerät daran angeschlossen sein kann, sind dann die weiteren Auswertungsschritte implementiert, insbesondere diejenigen des erfindungsgemäßen Verfahrens in einer seiner vorteilhaften Ausführungsformen. Es werden folglich helle und dunkle Teilbereiche in dem Helligkeitsprofil identifiziert, und der Codeinhalt des optischen Codes wird gelesen. Dazu werden aus dem Helligkeitsprofil erste Summenmaße für die Lichtmenge in den jeweiligen hellen Teilbereichen und zweite Summenmaße für die zu einem weißen Pegel fehlende Lichtmenge in den jeweiligen dunklen Teilbereichen bestimmt, und das Lesen des Codeinhalts basiert auf den ersten und zweiten Summenmaßen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der beispielhaften Montage eines Codelesers über einem Förderband, auf dem Objekte mit zu lesenden Codes gefördert werden;
- Fig. 2a: ein Beispiel eines verwaschen aufgenommenen Barcodes;
- Fig. 2b: ein Beispiel eines mit geringer Auflösung aufgenommenen Barcodes;
- Fig. 3: ein beispielhaftes Grauwertprofil zu dem verwaschenen Barcode gemäß Figur 2a;
- Fig. 4: einen Ausschnitt eines Grauwertprofils;
- Fig. 5: eine erneute Darstellung des Grauwertprofils gemäß Figur 4 nun mit eingetragenen ersten und zweiten Summenmaßen für die jeweiligen hellen und dunklen Teilbereiche des optischen Codes;
- Fig. 6a: ein weiteres Beispiel eines verwaschen aufgenommenen Barcodes;
- Fig. 6b: die Rekonstruktion des Barcodes gemäß 6a mit dem erfindungsgemäßen Verfahren;
- Fig. 7: ein Beispiel eines 2D-Codes mit einigen hellen und dunklen Teilbereichen, für die bis zu einer Helligkeitsgrenze Summenmaße bestimmt werden;
- Fig. 8: ein weiteres Beispiel eines 2D-Codes als Ausgangspunkt für die weiteren Figuren;
- Fig. 9a: eine Rekonstruktion des 2D-Codes gemäß Figur8 aus Summenmaßen nach spaltenweiser Unterteilung;
- Fig. 9b: eine Rekonstruktion des 2D-Codes gemäß Figur8 aus Summenmaßen nach zeilenweiser Unterteilung;
- Fig. 10a: die logische UND-Verknüpfung der Rekonstruktionen gemäß Figur 9a und 9b; und
- Fig. 10b: die logische ODER-Verknüpfung der Rekonstruktionen gemäß Figur 9a und 9b.

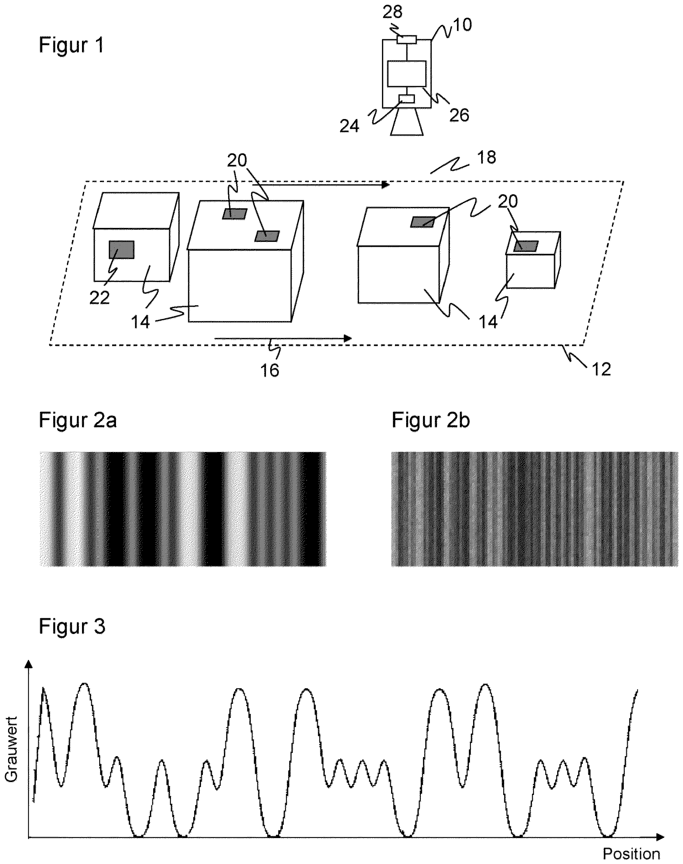

Figur 1 zeigt einen optoelektronischen Codeleser 10 in einer bevorzugten Anwendungssituation montiert über einem Förderband 12, welches Objekte 14, wie durch den Pfeil 16 angedeutet, durch den Erfassungsbereich 18 des Codelesers 10 fördert. Die Objekte 14 tragen an ihren Außenflächen optische Codes 20, die von dem Codeleser 10 erfasst und ausgewertet werden. Diese optischen Codes 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten optischen Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst beziehungsweise das darin implementierte Verfahren zum Decodieren von Codes, so dass dieses Beispiel nicht einschränkend verstanden werden darf.

Der Codeleser 10 erfasst mit einem Lichtempfänger 24 die geförderten Objekte 14 und deren optische Codes 20, und die entsprechenden Helligkeits- oder Grauwertprofile werden in einer Steuer- und Auswertungseinheit 26 weiterverarbeitet, um den Codeinhalt zu lesen. Es kommt für die Erfindung nicht auf das konkrete Erfassungsverfahren an, so dass der Codeleser 10 nach irgendeinem an sich bekannten Prinzip aufgebaut sein kann. Beispielsweise wird jeweils nur eine Zeile erfasst, sei es mittels eines zeilenförmigen Bildsensors oder in einem Scanverfahren, wobei im letztgenannten Fall ein einfacher Lichtempfänger wie eine Photodiode ausreicht. Es kann direkt versucht werden, aus einer Zeilenerfassung den Code 20 zu lesen, oder die Steuer- und Auswertungseinheit 26 fügt die im Laufe der Förderbewegung erfassten Zeilen zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist.

Über eine Schnittstelle 28 kann der Codeleser 10 Informationen ausgeben, wie gelesene Codes oder Bilddaten. Es ist auch denkbar, dass die Steuer- und Auswertungseinheit 26 nicht in dem eigentlichen Codeleser 10, also der in Figur 1 gezeigten Kamera angeordnet ist, sondern als eigenes Steuerungsgerät an einen oder mehrere Codeleser 10 angeschlossen wird. Dann dient die Schnittstelle 28 auch als Verbindung zwischen interner und externer Steuerung und Auswertung. Die Steuer- und Auswertungsfunktionalität kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 26 unabhängig von der konkreten Implementierung als Teil des Codelesers 10 aufgefasst.

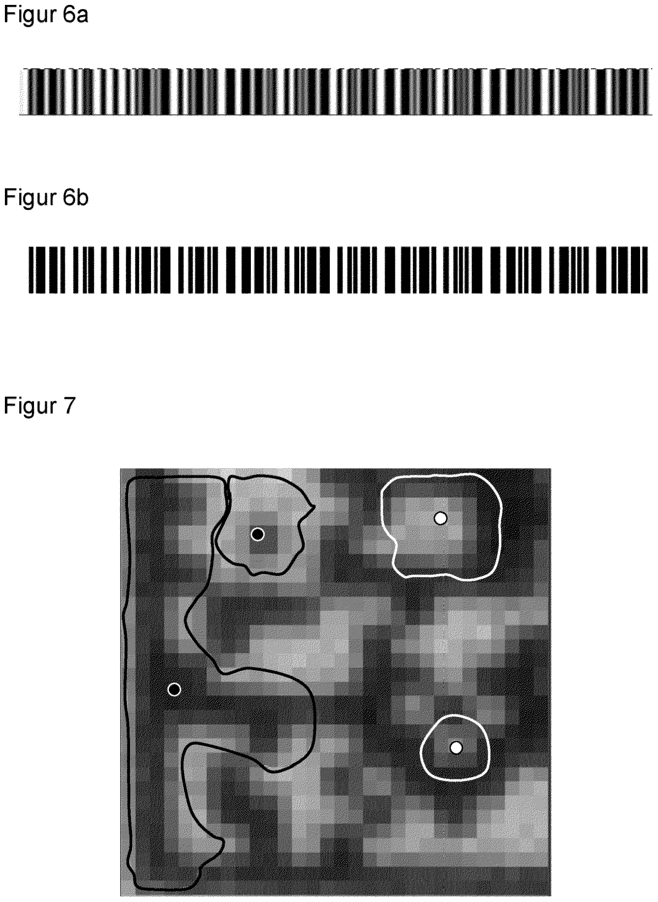

Die Figuren 2a und 2b zeigen jeweils eine Aufnahme eines problematischen optischen Barcodes. In Figur 2a ist der Barcode verwaschen, die Grenzen zwischen den hellen und dunklen Balken, Strichen oder Teilbereichen sind schlecht definiert. In Figur 2b ist der Barcode unzureichend aufgelöst und erscheint daher grobkörnig. Wie einleitend beschrieben, können solche Codes bei einem herkömmlichen Decodierverfahren Probleme bereiten, sie werden womöglich wegen der schlechten Erfassungsqualität nicht gelesen. Das nun zu beschreibende erfindungsgemäße Verfahren ist robuster und in vielen Fällen doch noch in der Lage, den Codeinhalt zu decodieren. Die Erläuterung bleibt zunächst beim Beispiel von Barcodes, das erfindungsgemäße Verfahren lässt sich aber analog auf 2D-Codes übertragen, worauf dann anschließend unter Bezugnahme auf die Figuren 7-10b eingegangen wird.

Figur 3 zeigt ein Helligkeitsprofil oder Grauwertprofil des verwaschenen Barcodes gemäß Figur 2a. In diesem Helligkeitsprofil sind die jeweiligen Helligkeiten, beispielsweise Werte von 0 bis 255 bei einer 8-Bit Kodierung der Helligkeit oder des Grauwerts, gegenüber der Position auf einer Linie quer zum Barcode aufgetragen. Die Betrachtung eines Helligkeitsprofils oder Grauwertprofils ist keine echte Einschränkung. Optische Codes bestehen aus Bereichen in zwei Modalitäten, häufig schwarze und weiße Farbe, manchmal Strukturen beziehungsweise Prägungen, aber jedenfalls lässt sich die Codeinformation durch Grauwertbilder erfassen. Auch kommt es für das Verständnis der Erfindung nicht darauf an, ob das Grauwertprofil als ein Scan eines Barcodescanners, eine Bildzeile eines zeilenförmigen Bildsensors oder eine durch ein flächiges Bild des Codes 20 gezogene Linie erfasst ist.

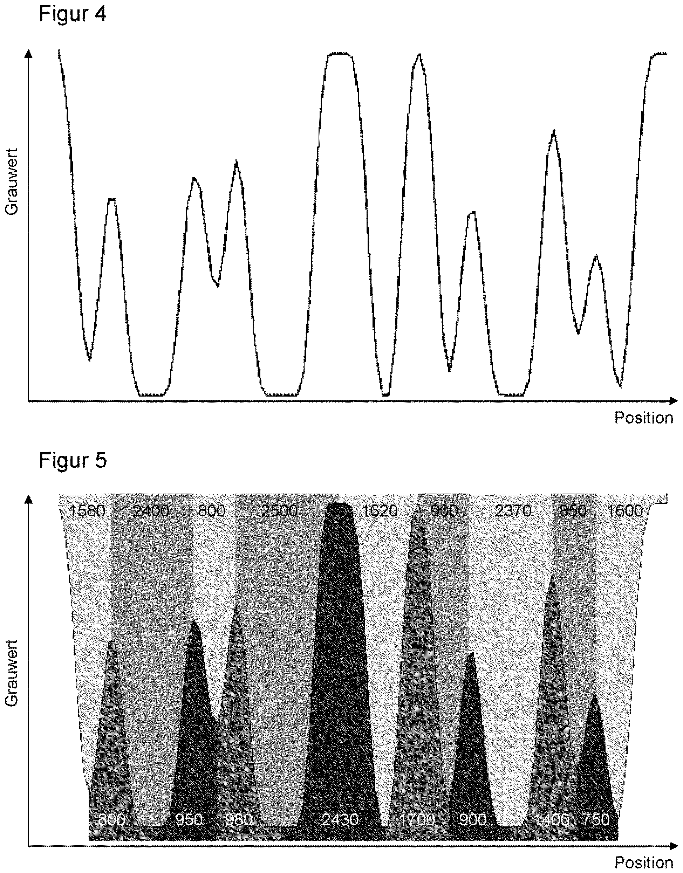

Figur 4 zeigt der besseren Übersichtlichkeit halber nochmals einen kleineren Abschnitt eines Helligkeitsprofils eines Barcodes mit verwaschenen Modulen. Im Idealfall wäre dies eine Stufenfunktion, die jeweils an den Balkengrenzen abrupt von einem minimalen Pegel auf einen maximalen Pegel wechselt oder umgekehrt, was hier vereinfacht als schwarz und weiß bezeichnet wird und beispielsweise durch Grauwerte 0 und 255 wiedergegeben wird. Das Ziel des erfindungsgemäßen Verfahrens ist letztlich, diesen Idealzustand wiederherzustellen beziehungsweise den Code so zu lesen, als läge dieser Idealzustand vor.

Die verwaschene Erfassung des Barcodes könnte durch aus der Bildverarbeitung bekannte Verfahren zumindest teilweise ausgeglichen werden, etwa durch algorithmisches Nachschärfen oder ein Bildverarbeitungsfilter. Das ist erfindungsgemäß als Vorverarbeitungsschritt denkbar. Das Nachschärfen oder Filtern könnte aber zum einen Übergänge in einer Weise verändern, die am Ende zu einer Fehllesung führen. Zum anderen verbleiben auch nach einer solchen Vorverarbeitung regelmäßig Störeffekte.

Figur 5 illustriert anhand des Helligkeitsprofils der Figur 4 dessen Auswertung mit Hilfe von Summenmaßen oder Integralen in einer Ausführungsform der Erfindung. In einer energetischen Betrachtung kann als Ausgangspunkt festgehalten werden, dass von den hellen Teilbereichen, hellen Balken oder Lücken eines Barcodes unabhängig von der Auflösung beziehungsweise der Pixeldichte immer dieselbe remittierte Lichtmenge von dem Lichtempfänger 24 erfasst wird. Im Falle von Störeffekten, wie unzureichende Fokussierung, zu geringe Abtastfrequenz oder Bewegungsartefakte, wird diese Lichtmenge gegebenenfalls auf mehrere Pixel verteilt und überlagert sich mit dem remittierten Licht anderer Teilbereiche des Barcodes. Die gesamte Lichtmenge der hellen Teilbereiche bleibt dabei gleich, und das bedeutet, dass das Integral über das Helligkeitsprofil nicht davon abhängt, ob und in welchem Ausmaß der Barcode verwaschen oder zu gering aufgelöst aufgenommen ist. Unter der Annahme, dass die dunklen Teilbereiche kein Licht remittieren, entspricht das genannte Integral der Summe des Lichts von allen hellen Teilbereichen.

Nun darf weiterhin angenommen werden, dass die Störeffekte zumindest insoweit lokal bleiben, als dass Licht eines hellen Teilbereiches nur die benachbarten dunklen Teilbereiche beleuchten wird, nicht aber fernere Teilbereiche. Damit muss aber dann das Integral über das Helligkeitsprofil im Bereich von einem dunklen Teilbereich zum nächsten dunklen Teilbereich, das genau einen hellen Teilbereich umfasst, gerade der von dem hellen Teilbereich remittierten Lichtmenge entsprechen. Der Kniff hierbei ist, dass dies eine summarische Betrachtung ist und das Integral von konkreten Helligkeitsverläufen, wie flacheren oder steileren Flanken oder sonstigen Unregelmäßigkeiten, nur wenig beeinflusst wird.

In Figur 5 sind unten entsprechende erste Summenmaße für die hellen Teilbereiche beispielhaft eingetragen. Dabei wurde jeweils von Minimum zu Minimum des Helligkeitsprofils integriert. Die jeweilige dem Integral entsprechende Fläche ist dunkel schattiert, wobei rein zur Veranschaulichung zwei verschiedene Grautöne verwendet wurden. Es ist nicht erforderlich, genau zwischen zwei Minima zu integrieren, da die Anfangs- und Endwerte der Integration ohnehin in einem dunklen Teilbereich liegen und daher zu dem Integral kaum beitragen.

Die gleiche Idee kann auf die dunklen Teilbereiche übertragen werden, indem das invertierte Helligkeitsprofil betrachtet wird. Invertieren kann als eine Spiegelung an der X-Achse oder rechnerisch ein Multiplizieren mit -1 verstanden werden. Um die dadurch entstehenden negativen Werte zu vermeiden, kann anschließend überall der maximale Pegel auf das invertierte Helligkeitsprofil aufaddiert werden, also beispielsweise der Wert 255 bei einer 8-Bit-Codierung der Helligkeitswerte. Die Integrationsgrenzen sind wiederum die Minima in dem invertierten Helligkeitsprofil und dementsprechend die Maxima in dem nicht invertierten Helligkeitsprofil. Entsprechende Summenmaße für die dunkeln Teilbereiche sind oben in Figur 5 eingetragen. Die jeweilige dem Integral entsprechende Fläche ist hell schattiert, wobei auch hier rein zur Veranschaulichung zwei verschiedene Grautöne verwendet wurden.

Die Annahme, dass das von einem hellen Teilbereich remittierte Licht nur die unmittelbar benachbarten dunklen Teilbereiche beeinflusst, kann auch gelockert werden. Auch dann kann jedem hellen Teilbereich ein passender Lichtanteil zugewiesen werden, und das Prinzip ist weiterhin analog anwendbar, entsprechend für die dunklen Teilbereiche. Die Integralgrenzen müssen also nicht zwingend auf direkt benachbarte Minima oder Maxima festgesetzt sein.

Das Ergebnis der geschilderten Auswertung ist eine Vielzahl von ersten Summenmaßen und zweiten Summenmaßen, jeweils ein erstes Summenmaß pro hellem Teilbereich und ein zweites Summenmaß pro dunklem Teilbereich des Barcodes. Diese Summenmaße können nun alternierend zu einer Sequenz zusammengefasst werden. Bei homogener Ausleuchtung des Barcodes sind die Summenmaße für jeden Teilbereich mit einer Ausdehnung entsprechend einem bestimmten Vielfachen proportional der Modulgröße gleich. Dabei sei daran erinnert, dass die Modulgröße die Ausdehnung des kleinsten Balkens des Barcodes beschreibt und die Ausdehnung sämtlicher Balken ein jeweiliges Vielfaches der Modulgröße beträgt. Decodieren kann als Klassifikation verstanden werden, die nach diesen Vielfachen sucht, denn darin streckt gerade die Codeinformation. Statt wie herkömmlich die Breite der Balken zu messen, werden erfindungsgemäß die Summenmaße oder Integrale verwendet, die nach den obigen Ausführungen ebenfalls die für ein Decodieren notwendige Information enthalten.

Im Beispiel der Figur 5 ergibt sich die folgende alternierende Sequenz von Integralen oder Summenmaßen, abwechselnd von oben und unten abgelesen: 1580, 800, 2400, 950, 800, 980, 2500, 2430, 1620, 1700, 900, 2370, 1400, 850, 750, 1600. Bei perfekter Invarianz der Integrale wären dies Vielfache eines größten gemeinsamen Teilers, der als Bezugsgröße dienen kann und der wiederum proportional zur Modulgröße ist. Es besteht nur eine Proportionalitätsbeziehung und keine Identität zur Modulgröße, weil Summenmaße beziehungsweise Integrale und nicht Breiten der Teilbereiche bestimmt wurden.

Um die Beispielsequenz zu klassifizieren, können beliebige Klassifikatoren eingesetzt werden. Erkennbar liegen große Differenzen zwischen den Summenmaßen zu unterschiedlich breiten Balken, so dass die Klassifikationsaufgabe sehr viel einfacher und robuster lösbar wird als beispielsweise bei Breiten, die wegen verwaschener Kanten einer großen Schwankung unterliegen. Es könnte beispielsweise das kleinste Summenmaß als Bezugsgröße gewählt werden, oder es werden die i kleinsten Summenmaße gemittelt. Dabei sollte i klein genug sein, um den Mittelwert nicht durch ein Integral zu einem breiteren Balken zu verwässern.

Mit einer solchen Klassifikation, die auch als Normierung beziehungsweise Diskretisierung verstanden werden kann, ergibt sich aus der obigen Beispielsequenz für die Codeelemente die Sequenz 2, 1, 3, 1, 1, 1, 3, 3, 2, 2, 1, 1, 3, 2, 1, 1, 2. Das ist das erfindungsgemäße und tatsächlich korrekte Decodierergebnis für den in Figur 4 und 5 gezeigten Abschnitt des Barcodes.

Die Figuren 6a-b illustrieren dies nochmals für einen vollständigen Beispielcode. Figur 6a zeigt die ursprüngliche, verwaschene Aufnahme des Barcodes, während Figur 6b einen rekonstruierten Barcode darstellt, entsprechend der Decodierung aus Summenmaßen beziehungsweise Integralen. Wichtig ist hierbei nicht, dass in Figur 6b die Balken scharf dargestellt sind, das liegt an der Rekonstruktion, sondern dass die Balkenbreiten genau den verwaschenen Barcode in Figur 6a wiedergeben. Bei herkömmlichen Decodierverfahren gäbe es hier Abweichungen zum wahren Codeinhalt, aufgrund derer womöglich der Barcode gar nicht gelesen werden könnte.

Figur 7 zeigt einen beispielhaften 2D-Code, auf den nun das bisher für Barcodes erläuterten Verfahren angewandt beziehungsweise erweitert wird. Die erfassten Grauwerte des 2D-Codes bilden ein nun zweidimensionales Helligkeitsprofil. Mit weißen Punkten sind zwei beispielhafte Maxima in hellen Teilbereichen und mit schwarzen Punkten zwei beispielhafte Minima in dunklen Teilbereichen bezeichnet. Eine jeweilige zugehörige weiße Linie beziehungsweise schwarze Linie deutet eine passende Integrationsgrenze an. Sie liegt dort, wo von einem weißen Punkt ausgehend eine Helligkeitsschwelle jeweils erstmals unterschritten beziehungsweise von einem schwarzen Punkt ausgehend erstmals überschritten wird. Es können zwei unterschiedliche Helligkeitsschwellen für helle Teilbereiche und dunkle Teilbereiche gesetzt sein, insbesondere können die Helligkeitsschwellen sehr tief beziehungsweise sehr hoch gewählt sein und so die Robustheit erhöhen. Ein Maximum ist dann von einem dunklen, ein Minimum von einem hellen Kantenzug umschlossen.

Auch in einem 2D-Code gibt es eine Modulgröße als kleinste Ausdehnung eines Codeelements, die aber nun in zwei Dimensionen gilt und somit ein kleinstes Quadrat definiert. Über die Summenmaße kann bestimmt werden, wie viele dieser kleinsten Quadrate einen hellen Teilbereich beziehungsweise einen dunklen Teilbereich bilden. Im Gegensatz zum eindimensionalen Fall genügt dies aber nicht allein zum Decodieren, da die Anordnung beispielsweise in einer langen Reihe, einem kompakten Block oder irgendeiner Zwischenform, ohne zusätzliche Ortsinformation nicht eindeutig ist. Auch die summarische Information über die Anzahl von kleinsten Quadraten pro Teilbereich kann als zusätzliche Informationsquelle den Ausschlag geben, ob ein Code noch gelesen wird, beispielsweise ein anderes Decodierverfahren parametrieren oder plausibilisieren.

Um die summarische Information anzureichern und einen stärkeren Ortsbezug zu schaffen, können 2D-Helligkeitsprofile unterteilt werden, und eine Ausführungsform des erfindungsgemäßen Verfahrens wird jeweils auf die Unterbereiche der Unterteilungen angewandt. Anschließend werden dann die Teilergebnisse zusammengefügt. Beispiele für solche Unterteilungen sind Rechtecke mit n x m Pixeln, insbesondere gewählt in Abhängigkeit von einer geschätzten Modulgröße, sowie Zeilen, Spalten oder schräge Linien. Speziell die Unterteilung in Zeilen beziehungsweise Spalten hat den Vorteil, dass darauf das für Barcodes beschriebene Verfahren unmittelbar angewandt werden kann. Es ist denkbar, das erfindungsgemäße Verfahren mehrfach mit verschiedenen Unterteilungen anzuwenden und die Ergebnisse zu verknüpfen.

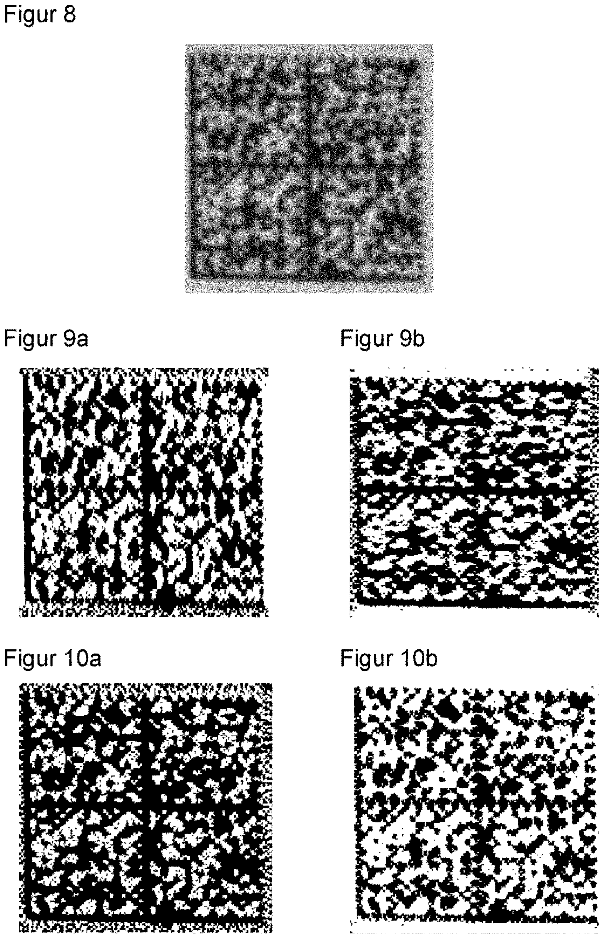

Figur 8 zeigt einen verwaschen aufgenommenen DataMatrix-Code als einen beliebigen Vertreter möglicher 2D-Codes. An diesem Beispiel sollen vorteilhafte Ausführungsformen beispielhaft illustriert werden.

In Figur 9a wurde spaltenweise unterteilt beziehungsweise integriert, also in jeder Spalte das oben zu Barcodes erläuterte Verfahren angewandt. In Figur 9b wurde zeilenweise unterteilt beziehungsweise integriert. Die Ergebnisse unterscheiden sich, sie sind abhängig von der gewählten Unterteilung. Eine Möglichkeit, hiermit umzugehen, sind jeweilige Klassifikations- oder Decodierversuche auf beiden Ergebnissen. Weiterhin ist denkbar, die Ergebnisse durch Bildverarbeitungsalgorithmen aufzubereiten.

Die Figuren 10a und 10b illustrieren eine weitere Möglichkeit, in der vorherige Ergebnisse logisch verknüpft werden. Konkret sind hier beispielhaft in Figur 10a das Spaltenintegralbild der Figur 9a und das Zeilenintegralbild der Figur 9b logisch UND-verknüpft und in Figur 10b logisch ODER-verknüpft. Auf diese Art und Weise kann die Richtungsabhängigkeit aufgelöst und das Ergebnis weiter verbessert werden.

## Patentansprüche

1. Verfahren zum Lesen eines optischen Codes (20), bei dem ein Helligkeitsprofil des Codes (20) aufgenommen wird, helle und dunkle Teilbereiche in dem Helligkeitsprofil identifiziert werden und der Codeinhalt des optischen Codes (20) gelesen wird,
**dadurch gekennzeichnet,**
**dass** aus dem Helligkeitsprofil erste Summenmaße für die Lichtmenge in den jeweiligen hellen Teilbereichen und zweite Summenmaße für die zu einem wei-ßen Pegel fehlende Lichtmenge in den jeweiligen dunklen Teilbereichen bestimmt werden und der Codeinhalt auf Basis der ersten und zweiten Summenmaße gelesen wird.

2. Verfahren nach Anspruch 1,
wobei für die ersten Summenmaße jeweils das Helligkeitsprofil zwischen zwei seiner Minima aufsummiert wird.

3. Verfahren nach Anspruch 1 oder 2,
wobei für die zweiten Summenmaße jeweils das Helligkeitsprofil zwischen zwei seiner Maxima aufsummiert wird.

4. Verfahren nach einem der vorhergehenden Ansprüche,
wobei zur Bestimmung der zweiten Summenmaße das Helligkeitsprofil invertiert und um ein Offset entsprechend dem weißen Pegel kompensiert wird.

5. Verfahren nach einem der vorhergehenden Ansprüche,
wobei die ersten Summenmaße und/oder die zweiten Summenmaße durch Integration bestimmt werden.

6. Verfahren nach einem der vorhergehenden Ansprüche,
wobei der Codeinhalt aus einer alternierenden Sequenz der ersten Summenmaße und der zweiten Summenmaße bestimmt wird.

7. Verfahren nach einem der vorhergehenden Ansprüche,
wobei die ersten Summenmaße und die zweiten Summenmaße anhand einer Bezugsgröße klassifiziert werden.

8. Verfahren nach einem der vorhergehenden Ansprüche,
wobei die ersten Summenmaße und die zweiten Summenmaße durch eine Bezugsgröße dividiert und dann diskretisiert werden.

9. Verfahren nach Anspruch 7 oder 8,
wobei die Bezugsgröße aus mindestens einem feinsten Summenmaß geschätzt wird.

10. Verfahren nach einem der vorhergehenden Ansprüche,
wobei der optische Code (20) ein 2D-Code ist und wobei die ersten Summenmaße und die zweiten Summenmaße in einer Umgebung von Minima oder Maxima bis zu einer durch mindestens einen Schwellwert bestimmten Helligkeitsgrenze bestimmt werden.

11. Verfahren nach einem der vorhergehenden Ansprüche,
wobei das Helligkeitsprofil in Unterabschnitte aufgeteilt wird, in denen jeweils erste Summenmaße und zweite Summenmaße bestimmt werden.

12. Verfahren nach Anspruch 11,
wobei die Unterabschnitte rechteckige Unterabschnitte, Zeilen oder Spalten sind.

13. Verfahren nach Anspruch 11 oder 12,
wobei das Helligkeitsprofil mehrfach in unterschiedliche Unterabschnitte aufgeteilt wird, um mehrfach erste und zweite Summenmaße zu bestimmen, und wobei die Ergebnisse miteinander verrechnet oder verglichen werden.

14. Verfahren nach Anspruch 13,
wobei die Ergebnisse durch logische Verknüpfung miteinander verrechnet oder verglichen werden.

15. Codeleser (10) zum Lesen von optischen Codes (20), der einen Lichtempfänger (24) zum Erfassen eines Helligkeitsprofils des optischen Codes (20) und eine Steuer- und Auswertungseinheit (26) aufweist, die dafür ausgebildet ist, helle und dunkle Teilbereiche in dem Helligkeitsprofil zu identifizieren und den Codeinhalt des optischen Codes (20) zu lesen,
**dadurch gekennzeichnet,**
**dass** die Steuer- und Auswertungseinheit (26) weiterhin dafür ausgebildet ist, aus dem Helligkeitsprofil erste Summenmaße für die Lichtmenge in den jeweiligen hellen Teilbereichen und zweite Summenmaße für die zu einem weißen Pegel fehlende Lichtmenge in den jeweiligen dunklen Teilbereichen zu bestimmen und den Codeinhalt auf Basis der ersten und zweiten Summenmaße zu lesen.

## Claims

1. A method for reading an optical code (20), wherein a brightness profile of the code (20) is recorded, light and dark subregions are identified in the brightness profile, and the code content of the optical code (20) is read,
**characterized in that** first sum measures for the amount of light in the respective light subregions and second sum measures for the amount of light missing from a white level in the respective dark subregions are determined from the brightness profile, and the code content is read on the basis of the first and second sum measures.

2. The method according to claim 1,
wherein the brightness profile between two of its minima is summed up for each of the first sum measures.

3. The method according to claim 1 or 2,
wherein the brightness profile between two of its maxima is added up for each of the second summation measures.

4. The method according to any of the preceding claims,
wherein the brightness profile is inverted and compensated by an offset corresponding to the white level to determine the second sum measures.

5. The method according to any of the preceding claims,
wherein the first sum measures and/or the second sum measures are determined by integration.

6. The method according to any of the preceding claims,
wherein the code content is determined from an alternating sequence of the first sum measures and the second sum measures.

7. The method according to any of the preceding claims,
wherein the first sum measures and the second sum measures are classified on the basis of a reference quantity.

8. The method according to any of the preceding claims,
wherein the first sum measures and the second sum measures are divided by a reference quantity and then discretized.

9. The method according to claim 7 or 8,
wherein the reference quantity is estimated from at least one finest sum measure.

10. The method according to any of the preceding claims,
wherein the optical code (20) is a 2D code and wherein the first sum measures and the second sum measures are determined in a vicinity of minima or maxima up to a brightness limit determined by at least one threshold value.

11. The method according to any of the preceding claims,
wherein the brightness profile is divided into subsections in which respective first sum measures and second sum measures are determined.

12. The method according to claim 11,
wherein the subsections are rectangular subsections, rows or columns.

13. The method according to claim 11 or 12,
wherein the brightness profile is divided several times into different subsections in order to determine first and second sum measures a plurality of times, and wherein the results are offset or compared with each other.

14. The method according to claim 13,
wherein the results are offset or compared with each other by logical combination.

15. A code reader (10) for reading optical codes (20), comprising a light receiver (24) for detecting a brightness profile of the optical code (20) and a control and evaluation unit (26) configured to identify bright and dark subregions in the brightness profile and to read the code content of the optical code (20), **characterized in that** the control and evaluation unit (26) is further configured to determine from the brightness profile first sum measures for the amount of light in the respective bright subregions and second sum measures for the amount of light missing from a white level in the respective dark subregions and to read the code content on the basis of the first and second sum measures.

## Revendications

1. Procédé de lecture d'un code optique (20), consistant à enregistrer un profil de luminosité du code (20), à identifier des zones partielles claires et sombres dans le profil de luminosité, et à lire le contenu du code optique (20),
**caractérisé en ce que**
à partir du profil de luminosité, des premières valeurs cumulées sont déterminées pour la quantité de lumière dans les zones partielles claires respectives, et des deuxièmes valeurs cumulées sont déterminées pour la quantité de lumière manquant à un niveau blanc dans les zones partielles sombres respectives, et le contenu du code est lu sur la base des premières et deuxièmes valeurs cumulées.

2. Procédé selon la revendication 1,
dans lequel, pour les premières valeurs cumulées, le profil de luminosité est cumulé entre deux de ses minimums.

3. Procédé selon la revendication 1 ou 2,
dans lequel, pour les deuxièmes valeurs cumulées, le profil de luminosité est cumulé entre deux de ses maximums.

4. Procédé selon l'une des revendications précédentes,
dans lequel, pour déterminer les deuxièmes valeurs cumulées, le profil de luminosité est inversé et est compensé d'un décalage correspondant au niveau blanc.

5. Procédé selon l'une des revendications précédentes,
dans lequel les premières valeurs cumulées et/ou les deuxièmes valeurs cumulées sont déterminées par intégration.

6. Procédé selon l'une des revendications précédentes,
dans lequel le contenu du code est déterminé à partir d'une séquence alternée des premières valeurs cumulées et des deuxièmes valeurs cumulées.

7. Procédé selon l'une des revendications précédentes,
dans lequel les premières valeurs cumulées et les deuxièmes valeurs cumulées sont classifiées à l'aide d'une grandeur de référence.

8. Procédé selon l'une des revendications précédentes,
dans lequel les premières valeurs cumulées et les deuxièmes valeurs cumulées sont divisées par une grandeur de référence puis discrétisées.

9. Procédé selon la revendication 7 ou 8,
dans lequel la grandeur de référence est estimée à partir d'au moins une valeur cumulée la plus fine.

10. Procédé selon l'une des revendications précédentes,
dans lequel le code optique (20) est un code 2D, et les premières valeurs cumulées et les deuxièmes valeurs cumulées sont déterminées dans un environnement de minimums ou de maximums jusqu'à une limite de luminosité déterminée par au moins une valeur seuil.

11. Procédé selon l'une des revendications précédentes,
dans lequel le profil de luminosité est subdivisé en sous-sections dans lesquelles sont respectivement déterminées des premières valeurs cumulées et des deuxièmes valeurs cumulées.

12. Procédé selon la revendication 11,
dans lequel les sous-sections sont des sous-sections rectangulaires, des lignes ou des colonnes.

13. Procédé selon la revendication 11 ou 12,
dans lequel le profil de luminosité est subdivisé plusieurs fois en différentes sous-sections afin de déterminer plusieurs fois des premières et des deuxièmes valeurs cumulées, et les résultats sont compensés ou comparés entre eux.

14. Procédé selon la revendication 13,
dans lequel les résultats sont compensés ou comparés entre eux par une combinaison logique.

15. Lecteur de code (10) pour lire des codes optiques (20), comprenant un récepteur de lumière (24), destiné à détecter un profil de luminosité du code optique (20), et une unité de commande et d'évaluation (26) conçue pour identifier des zones partielles claires et sombres dans le profil de luminosité et pour lire le contenu du code optique (20),
**caractérisé en ce que**
l'unité de commande et d'évaluation (26) est en outre conçue pour déterminer, à partir du profil de luminosité, des premières valeurs cumulées pour la quantité de lumière dans les zones partielles claires respectives et des deuxièmes valeurs cumulées pour la quantité de lumière manquant à un niveau blanc dans les zones partielles sombres respectives, et pour lire le contenu du code sur la base des premières et deuxièmes valeurs cumulées.
